# EUROPEAN PATENT APPLICATION

(11) **EP 2 613 558 A2**
(43) Date of publication of application: **10.07.2013**
(21) Application number: 12190422.1
(22) Date of filing: 29.10.2012
(51) Int. Cl.: H04N 21/482

(54) **Electronic apparatus, content display system, and program guide display control method**

(30) Priority: 06.01.2012 JP 2012001271
(71) Applicant: Kabushiki Kaisha Toshiba, Tokyo 105-8001 (JP)
(72) Inventor: Esaka, Naoki, Tokyo, 105-8001 (JP)
(74) Representative: Henkel, Breuer & Partner

(57) **Abstract**

According to one embodiment, an electronic apparatus (33) receives electric program guide information from an external server (101) via a network (100). The apparatus (30) receives, from a video device (10), channel information indicating a currently tuned channel in the video device (10). The apparatus (30) displays an electric program guide on a program guide area (504) on a display screen of the apparatus (30) based on the electric program guide information. In response to reception of the channel information, the apparatus (30) changes the displayed contents of the program guide area (504) based on the received channel information and a current time, such that a guide corresponding to a currently on-air program in the currently tuned channel is displayed on the program guide area (504).

## Description

Embodiments described herein relate generally to an electronic apparatus, a content display system, and a program guide display control method, which are required to present electronic program guide information to the user.

In recent years, various broadcast services such as terrestrial broadcasting, direct broadcasting by satellite (DBS), and cable television (CATV) have become available. A viewer can view a broadcast program on a desired channel by operating a video device such as a television, set-top box, or video recorder.

In general, operations of the video device are controlled using a remote control unit (remote controller) coming with that video device. The operations of the video device include a channel switching operation, volume control operation, and the like.

In recent years, a technique for setting, for example, video recording reservation from a personal computer to the video device via the Internet has also been developed.

However, recently, as the number of viewable channels increases, a function of supporting program selection by the viewer is demanded.

A scene will be assumed wherein the viewer selects a desired program from those which are now on the air. The viewer may sequentially switch channels to search for a program having desired contents. A television displays a program of a channel which is currently tuned in. However, it is difficult for the viewer to recognize the contents of a program even when he or she views only one scene of the program.

A general architecture that implements the various features of the embodiments will now be described with reference to the drawings. The drawings and the associated descriptions are provided to illustrate the embodiments and not to limit the scope of the invention.
FIG. 1 is an exemplary block diagram illustrating the arrangement of a content display system including an electronic apparatus according to an embodiment and a video device cooperated with the electronic apparatus;
FIG. 2 is an exemplary view illustrating the first example of synchronization processing between the electronic apparatus and video device according to the embodiment;
FIG. 3 is an exemplary view illustrating the second example of synchronization processing between the electronic apparatus according to the embodiment and the video device;
FIG. 4 is an exemplary view illustrating the third example of synchronization processing between the electronic apparatus according to the embodiment and the video device;
FIG. 5 is an exemplary view illustrating the fourth example of synchronization processing between the electronic apparatus according to the embodiment and the video device;
FIG. 6 is an exemplary view illustrating the fifth example of synchronization processing between the electronic apparatus according to the embodiment and the video device;
FIG. 7 is an exemplary view illustrating the sixth example of synchronization processing between the electronic apparatus according to the embodiment and the video device;
FIG. 8 is an exemplary view illustrating the seventh example of synchronization processing between the electronic apparatus according to the embodiment and the video device;
FIG. 9 is an exemplary view illustrating the eighth example of synchronization processing between the electronic apparatus according to the embodiment and the video device;
FIG. 10 is an exemplary view illustrating the ninth example of synchronization processing between the electronic apparatus according to the embodiment and the video device;
FIG. 11 is an exemplary view for explaining an electronic program guide displayed on a display of the electronic apparatus according to the embodiment;
FIG. 12 is an exemplary view for explaining processing executed when the user taps a "Now" button on the electronic program guide shown in FIG. 11;
FIG. 13 is an exemplary view for explaining processing executed when the user taps a "Ch" button on the electronic program guide shown in FIG. 11;
FIG. 14 is an exemplary view for explaining parameters used in communications between the electronic apparatus according to the embodiment and the video device;
FIG. 15 is an exemplary view for explaining parameters used in communications between the electronic apparatus according to the embodiment and a metadata server;
FIG. 16 is an exemplary block diagram illustrating the system arrangement of the electronic apparatus according to the embodiment;
FIG. 17 is an exemplary flowchart for explaining the processing sequence executed by the electronic apparatus of the embodiment upon tapping of the "Now" button;
FIG. 18 is an exemplary flowchart for explaining the processing sequence executed by the electronic apparatus of the embodiment upon tapping of the "Ch" button;
FIG. 19 is an exemplary flowchart for explaining the processing sequence executed by the electronic apparatus of the embodiment when the video device notifies the electronic apparatus of channel information; and
FIG. 20 is an exemplary flowchart for explaining another example of the processing sequence executed by the electronic apparatus of the embodiment when the video device notifies the electronic apparatus of channel information.

Various embodiments will be described hereinafter with reference to the accompanying drawings.

In general, according to one embodiment, an electronic apparatus is configured to communicate with a video device. The electronic apparatus includes a program guide information receiver, a channel information receiver, and a display control module. The program guide information receiver receives electric program guide information from an external server via a network. The channel information receiver receives, from the video device, channel information indicating a currently tuned channel in the video device. The display control module displays an electric program guide on a program guide area on a display screen of the electronic apparatus based on the electric program guide information. In response to reception of the channel information, the display control module changes the displayed contents of the program guide area based on the received channel information and a current time, such that a guide corresponding to a currently on-air program in the currently tuned channel is displayed on the program guide area.

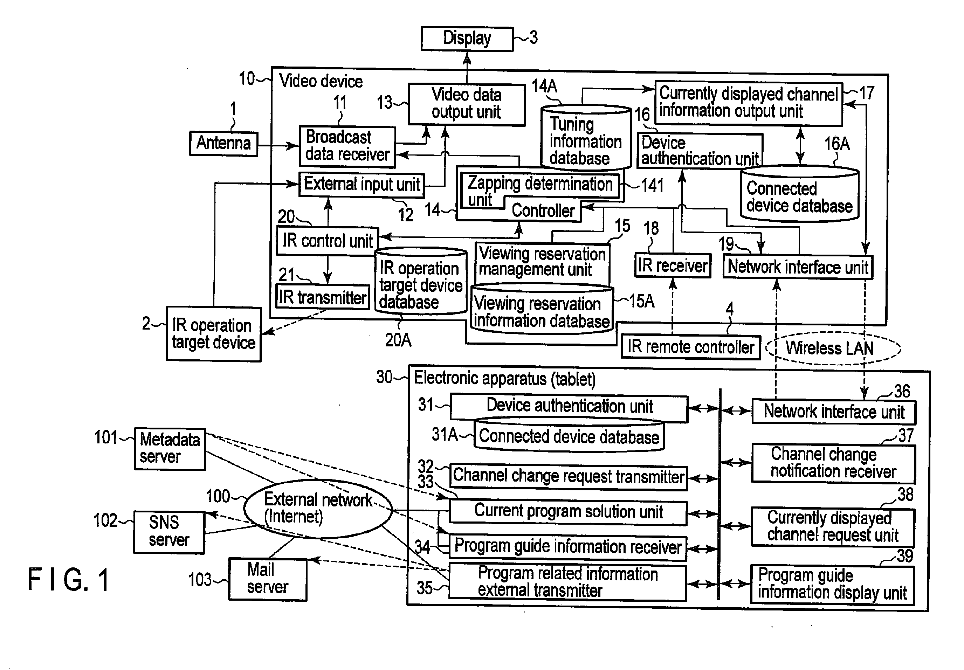

An example of the arrangement of a content display system including an electronic apparatus according to one embodiment will be described first with reference to FIG. 1. This electronic apparatus is implemented by a portable terminal (portable device) such as a PDA, smartphone, or tablet computer. The case will be assumed hereinafter wherein this electronic apparatus is configured by a tablet computer 30.

This tablet computer 30 is configured to operate in cooperation with a video device 10 (for example, a TV, set-top box, video recorder, etc.) connected to a home network (for example, a wireless LAN) by communicating with the video device 10. Furthermore, the tablet computer 30 can also execute communications with various servers, for example, a metadata server 101, social network service (SNS) server 102, mail server 103, and the like via an external network 100 such as the Internet.

The metadata server 101 manages electric program guide (EPG) information associated with various broadcast programs as metadata. The tablet computer 30 can receive electric program guide (EPG) information from the metadata server 101. The tablet computer 30 can download electric program guide information for a certain period (for example, two weeks) associated with each of all viewable broadcasting stations (also called broadcast service providers) from the metadata server 101. The tablet computer 30 can display a program guide (EPG) on its display based on the received program guide (EPG) information. The program guide provides a guide (a program title, broadcast start time, broadcast duration, etc.) corresponding to each of a plurality of programs. Furthermore, the tablet computer 30 has a function of automatically changing (updating) the currently displayed contents of the program guide (EPG), so that a portion of the program guide (EPG) corresponding to a guide, which corresponds to a program currently displayed on the video device 10, is displayed on the display of the tablet computer 30. The tablet computer 30 updates the currently displayed contents of the program guide (EPG) so as to display, on the display, the guide corresponding to the program currently displayed on the video device 10 by, for example, scrolling the program guide (EPG).

The video device 10 includes a broadcast data receiver 11, external input unit 12, video data output unit 13, controller 14, viewing reservation management unit 15, device authentication unit 16, currently displayed channel information output unit 17, IR (Infrared Ray) receiver 18, network interface unit 19, IR control unit 20, IR transmitter 21, and the like.

The broadcast data receiver 11 is configured to receive broadcast program data. The broadcast data receiver 11 may include a plurality of tuners respectively corresponding to a plurality of types of broadcast signals (terrestrial broadcasting, DBS, etc.) The broadcast data receiver 11 is configured to tune in an arbitrary viewing target channel from a plurality of receivable channels under the control of the controller 14.

The video data output unit 13 outputs a video image of a program in a channel, which is currently tuned in by the broadcast data receiver 11, to a display 3. When the video device 10 is a TV, the display 3 is arranged in the TV. When the video device 10 is a set-top box, the video image of the program is sent to a TV, and is displayed on the display 3 in the TV.

If the external input unit 12 is selected, the video data output unit 13 outputs a video image output from another video device (IR operation target device) 2 connected to the external input unit 12 to the display 3. The video device (IR operation target device) 2 is, for example, a set-top box. This set-top box can execute a tuning operation in response to a remote control signal transmitted from the IR transmitter 21.

The controller 14 manages channel information indicating a currently tuned channel in the video device 10 using a tuning information database 14A. More specifically, the controller 14 stores a channel, which is currently tuned in by the broadcast data receiver 11, in the tuning information database 14A as channel information indicating the currently displayed channel. If the external input unit 12 is selected as a video input, information indicating a channel, which is currently tuned in by the video device (IR operation target device) 2, is stored in the tuning information database 14A as channel information indicating the currently displayed channel.

The viewing reservation management unit 15 executes viewing reservation processing in response to an operation of an IR remote control unit (IR remote controller) 4 by the user. When a time corresponding a start time of a program reserved by the viewing reservation processing is reached, switching to a channel corresponding to that program is automatically executed.

The device authentication unit 16 executes device authentication processing to register each device having cooperative capability with the video device 10 in a connected device database 16A. The tablet computer 30 is one of cooperative devices with the video device 10.

The currently displayed channel information output unit 17 reads out channel information indicating a currently tuned channel (currently displayed channel) from the tuning information database 14A, and transmits the readout channel information to a registered device such as the tablet computer 30 via the network interface unit 19. Information indicating each registered device is stored in the connected device database 16A. The channel information is wirelessly transmitted to the registered device such as the tablet computer 30 via the home network (for example, a wireless network such as a wireless LAN). When an inquiry signal of a currently tuned channel is received from the tablet computer 30, the currently displayed channel information output unit 17 wirelessly transmits the channel information to the respective registered devices including the tablet computer 30. Also, every time a channel switching event occurs at the video device 10, the currently displayed channel information output unit 17 can automatically and wirelessly transmit channel information indicating a changed channel to the respective registered devices including the tablet computer 30.

Note that a zapping determination unit 141 in the controller 14 determines whether or not a current channel switching operation is a so-called "zapping" operation where channels are switched very frequently. When the zapping determination unit 141 determines that the current channel switching operation is the zapping operation, processing for automatically transmitting channel information may be skipped.

Using an IR operation target device database 20A, the IR control unit 20 manages external video devices (IR operation target devices) which are controllable by the operation of the IR remote controller 4. When a channel switching request signal of the IR operation target device 2 is received from the IR remote controller 4, the IR control unit 20 transmits a channel switching signal to the IR operation target device 2 via the IR transmitter 21.

The tablet computer 30 serves as a second screen device used to present various kinds of information associated with individual programs to the user. An example of information associated with programs includes the program guide (EPG). By displaying the program guide (EPG) on a program guide area on the display screen of the tablet computer 30, even when the video device 10 does not have any function of displaying a program guide, the program guide can be presented to the user. Furthermore, the tablet computer 30 can automatically change the displayed contents of the program guide area so as to display, on the program guide area, a guide corresponding to a currently on-air program (currently displayed program) in a currently tuned channel based on the channel information received from the video device 10 and a current time. In processing required to change the displayed contents of the program guide area, for example, the program guide on the program guide area is automatically scrolled, thereby displaying the guide corresponding to the currently displayed program on the program guide area. In this case, the guide corresponding to the currently displayed program may be highlighted.

Hence, the user can view the guide corresponding to the currently displayed program in real time without manually scrolling the program guide. Therefore, even when the video device 10 does not have any function of displaying information associated with the currently displayed program, the guide corresponding to the currently displayed program can be presented to the user.

Furthermore, the tablet computer 30 can retrieve messages for the currently displayed program, which messages are written in the SNS server 102 on the Internet, from the SNS server 102, and can display these messages on the display screen of the tablet computer 30.

The tablet computer 30 includes a device authentication unit 31, channel change request transmitter 32, current program solution unit 33, program guide information receiver 34, program related information external transmitter 35, network interface unit 36, channel change notification receiver 37, currently displayed channel request unit 38, program information display unit 39, and the like.

The device authentication unit 31 executes device authentication processing to register each video device having cooperative capability with the tablet computer 30 in a connected device database 31A. The video device 10 is one of cooperative devices with the tablet computer 30. When the user selects a certain broadcasting station included in a broadcasting station list displayed on the program guide, the channel change request transmitter 32 wirelessly transmits a channel switching request signal that requests to switch a channel to that corresponding to the selected broadcasting station to registered devices including the video device 10 via the network interface unit 36. That is, when the user taps a certain broadcasting station (channel) on the program guide, the channel change request transmitter 32 requests the video device 10 to switch a channel to the tapped broadcasting station (channel).

The current program solution unit 33 executes processing required to retrieve detailed information associated with a currently displayed program on the video device 10 from the metadata server 101. That is, the current program solution unit 33 transmits, via the external network 100, a guide information retrieval request including channel information received from the video device 10 and the current time to the metadata server 101, and retrieves detailed information associated with a currently displayed program in a currently tuned channel from the metadata server 101. Then, the current program solution unit 33 displays the detailed information on the display screen of the tablet computer 30. In this case, the detailed information may be popped up on the program guide displayed on the program guide area. The program guide information receiver 34 receives program guide (EPG) information from the metadata server 101 via the external network 100. As described above, program guide information for about two weeks associated with each individual broadcasting station can be downloaded simultaneously from the metadata server 101.

The program related information external transmitter 35 executes processing required to externally transmit information (message) associated with the currently displayed program on the video device 10 via means such as an SNS server, Weblog, e-mail, or the like. Furthermore, the program related information external transmitter 35 can also retrieve messages for the currently displayed program, which messages are written in the SNS server 102, from the SNS server 102, and can display the messages on the display screen of the tablet computer 30. Moreover, the program related information external transmitter 35 can also transmit a search request to a search site on the Internet, and can display the search result on the display screen of the tablet computer 30. In this case, the search request may include the channel information received from the video device 10 as a search keyword, or may include some words in guide information in the program guide corresponding to the currently displayed program on the video device 10 as search keywords.

The network interface unit 36 is a communication device which executes wireless communications with respective registered devices including the video device 10 via the home network such as the wireless LAN. The network interface unit 36 can also execute communications with respective servers on the external network 100 such as the Internet via a router in the home network.

The channel change notification receiver 37 receives a channel change notification wirelessly transmitted from the video device 10 via the network interface unit 36. This channel change notification is automatically transmitted from the video device 10 to the tablet computer 30 when the displayed channel has been switched in the video device 10. The currently displayed channel request unit 38 wirelessly transmits an inquiry signal of a currently tuned channel (currently displayed channel) to the video device 10 via the network interface unit 36. For example, in response to occurrence of an event that requests to display a guide associated with a currently on-air program in a currently tuned channel, the currently displayed channel request unit 38 wirelessly transmits an inquiry signal of the currently displayed channel to the video device 10, thereby retrieving channel information indicating the currently displayed channel from the video device 10.

The program guide information display unit 39 is a display control unit which displays an electric program guide (EPG) on the program guide area on the display screen of the display of the tablet computer 30 based on program guide information received from the metadata server 101. The electric program guide displays guides respectively corresponding to a plurality of programs. Furthermore, the program guide information display unit 39 changes the displayed contents of the program guide area so as to display a guide corresponding to a currently on-air program in a currently tuned channel on the program guide area, in response to reception of channel information. That is, the program guide information display unit 39 automatically changes the displayed contents of the program guide area based on the received channel information and the current time.

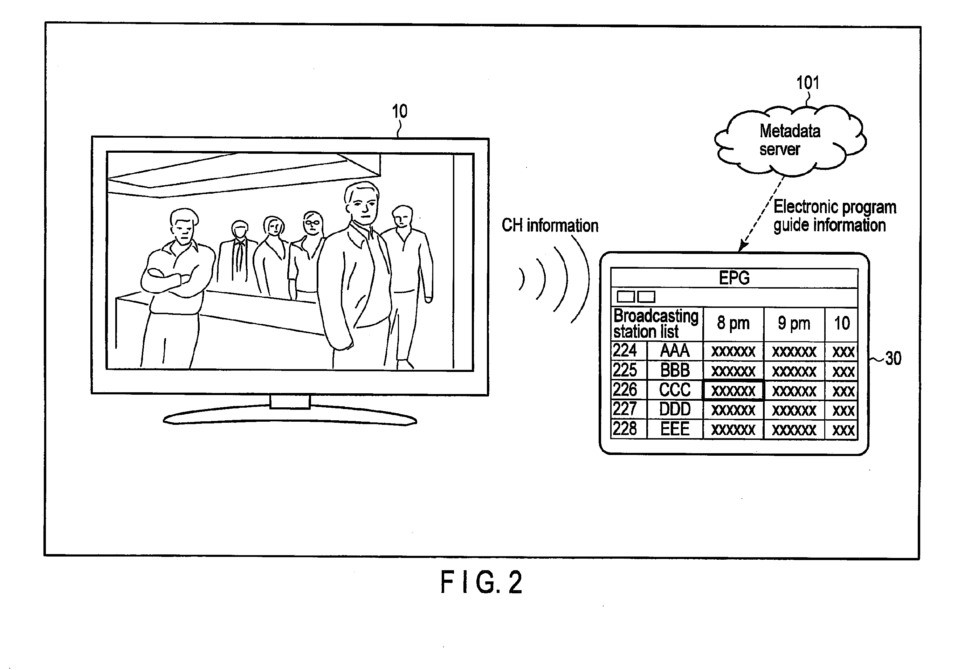

Some use cases associated with synchronization processing between the tablet computer 30 and video device 10 will be described below with reference to FIGS. 2, 3, 4, 5, 6, 7, 8, 9, and 10.

The following description will be given under the assumption that the video device 10 is a TV and the IR operation target device 2 is a set-top box.

FIG. 2 shows the first example of the synchronization processing. As shown in FIG. 2, the tablet computer 30 receives program guide (EPG) information from the metadata server 101, and displays a program guide (EPG) on the program guide area on the display screen of its display. Since the program guide area has a limited size, the program guide contents simultaneously displayable on the program guide area are limited. That is, only some channels are displayed in the program guide on the program guide area, and only guides associated with programs in specific time zones, which are broadcast in these some channels, are displayed. In this manner, only a certain portion in the program guide (EPG) is displayed on the display of the tablet computer 30.

The program guide area includes two-dimensional program grids specified by a plurality of rows and a plurality of columns. A broadcasting station list (channel list) is allocated in one of the row and column directions, and a time axis is allocated in the other of the row and column directions. The program grids display guides (program titles and the like) of some programs which are to be broadcast in certain time zones indicated by the time axis in association with some channels included in the broadcasting station list.

The tablet computer 30 sends an inquiry about channel information (CH information), which is currently tuned in by the video device (TV) 10, to the video device (TV) 10, thereby retrieving the currently tuned channel information (CH information) from the video device (TV) 10. Then, the tablet computer 30 changes the displayed contents of the program guide area so as to display, on the program guide area, a guide of a currently on-air program (currently displayed program) in the currently tuned channel, based on the currently tuned channel information and the current time. In other words, the tablet computer 30 scrolls the program guide in at least one of an up-and-down direction and a right-and-left direction, so that a certain portion in the program guide, which includes the guide of the currently displayed program, is displayed on the program guide area. In this manner, the currently displayed contents of the program guide area are changed, and the guide of the currently displayed program on the video device (TV) 10 appears on the program guide area.

For example, if a currently tuned channel of the video device (TV) 10 is that of channel No. 226 (broadcasting station CCC), and the current time is 8 pm, a certain portion in the program guide (EPG), which includes a guide of a program to be broadcast at 8 pm in the channel of channel No. 226, appears on the program guide area, as shown in FIG. 2. In this case, the guide of the program to be broadcast at 8 pm in the channel of channel No. 226 may be highlighted. As an example of highlighting, a frame may be displayed on an area corresponding to this guide, the area corresponding to this guide may be displayed in a specific color, a size of the region corresponding to this guide may be enlarged, and so forth.

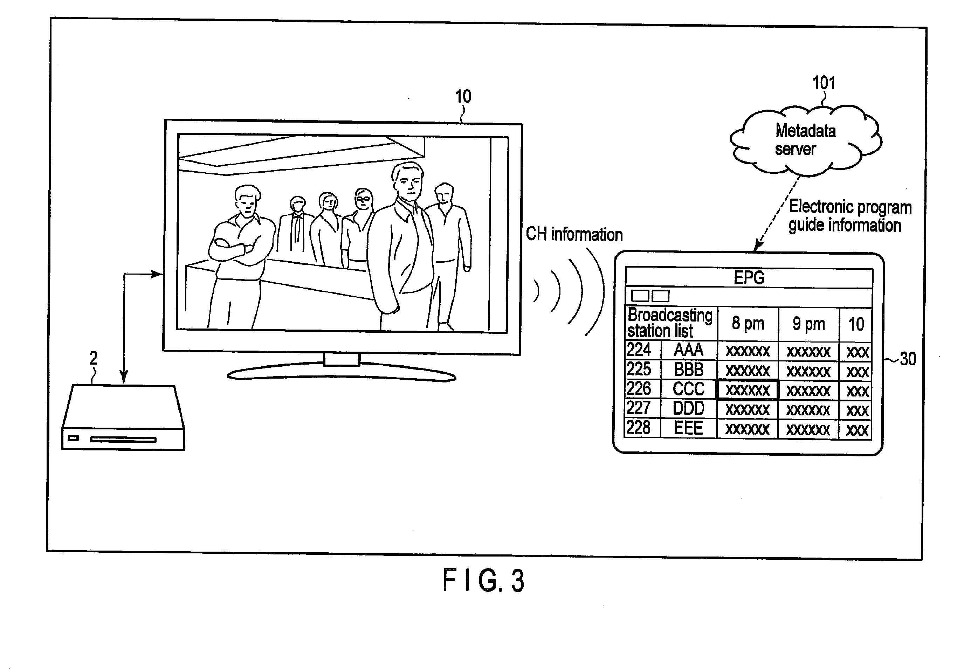

FIG. 3 shows the second example of the synchronization processing. This example assumes a case in which the set-top box (STB) 2 is connected to the external input of the video device (TV) 10, and a video image of a program in a channel, which is tuned in by the STB 2, is displayed on the display of the video device (TV) 10. Since the STB 2 is the IR operation target device, the video device (TV) 10 can transmit a channel switching signal to the STB 2 in response to an operation of the IR remote control unit (IR remote controller) 4 by the user. Therefore, the video device (TV) 10 can recognize a currently tuned channel in the STB 2.

The tablet computer 30 retrieves the currently tuned channel information in the STB 2 from the video device (TV) 10. That is, the tablet computer 30 sends an inquiry about the currently tuned channel information (CH information) to the video device (TV) 10, and then retrieves the currently tuned channel information in the STB 2 from the video device (TV) 10. The tablet computer 30 then scrolls the program guide on the program guide area, so as to display a guide of a currently display program on the video device (TV) 10 on the program guide, based on the currently tuned channel information and the current time. As a result, the currently displayed contents of the program guide area are changed, and a guide of the currently displayed program on the video device (TV) 10 appears on the program guide area.

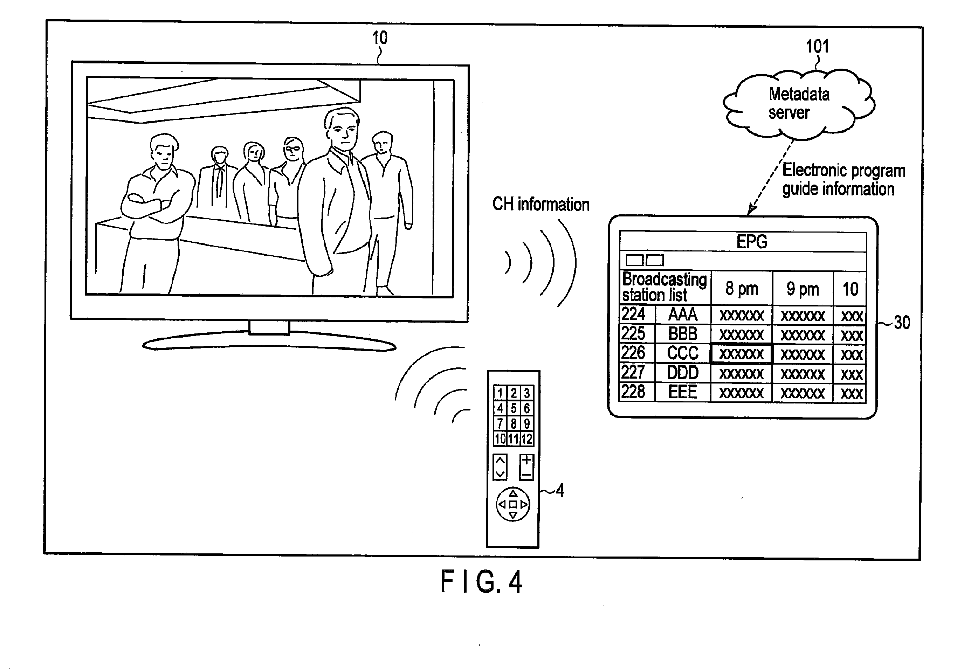

FIG. 4 shows the third example of the synchronization processing. The video device (TV) 10 switches a channel to be viewed in response to reception of a channel switching signal from the IR remote control unit 4. In response to occurrence of this channel switching event, the video device (TV) 10 automatically notifies the tablet computer 30 of channel information indicating a channel number as a switching destination.

The tablet computer 30 scrolls the program guide on the program guide area so as to display a guide of a currently displayed program on the video device (TV) 10 on the program guide, based on the channel information notified from the video device (TV) 10 and the current time. Then, the currently displayed contents on the program guide area are changed, and the guide of the currently displayed program on the video device (TV) 10 appears on the program guide area.

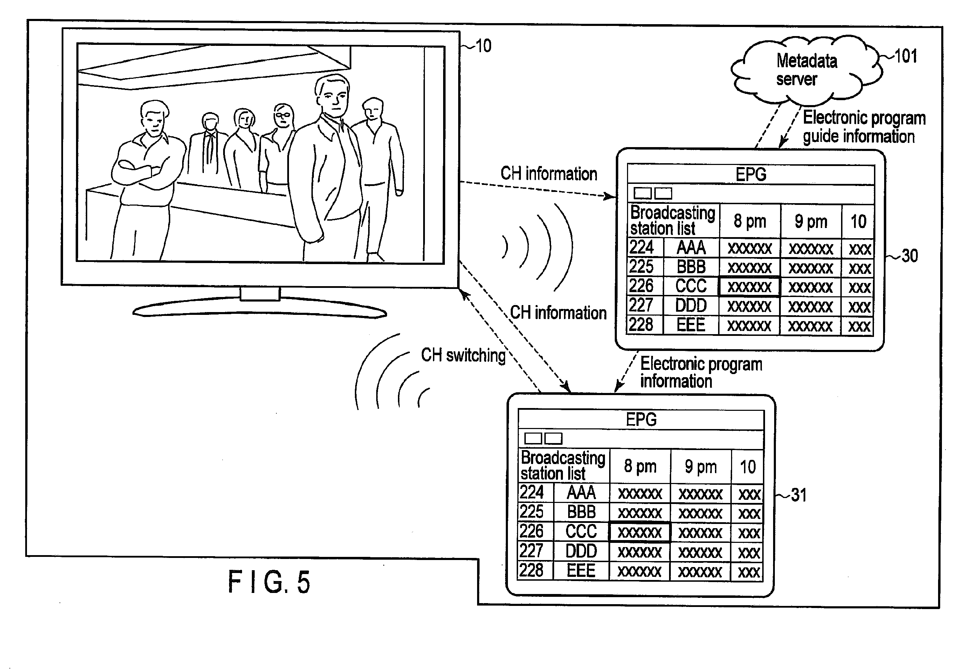

FIG. 5 shows the fourth example of the synchronization processing. This example assumes a case in which two tablet computers 30 and 31 are wirelessly connected to the video device (TV) 10. The tablet computer 31 has the same functions as those of the aforementioned tablet computer 30. When the user selects a certain broadcasting station on a broadcasting station list displayed on the display screen of the tablet computer 31, the tablet computer 31 transmits a channel switching request signal that requests to switch a channel to that corresponding to the selected broadcasting station to the video device (TV) 10.

In the video device (TV) 10, a channel to be tuned in is switched to that designated by the channel switching request signal, and a program of the channel designated by the channel switching request signal is displayed. Furthermore, the video device (TV) 10 automatically notifies the tablet computers 30 and 31 of channel information indicating a channel number as a switching destination.

The tablet computer 30 scrolls the program guide on the program guide area, so as to display a guide of the currently displayed program on the video device (TV) 10 on the program guide, based on the channel information notified from the video device (TV) 10 and the current time. As a result, the currently displayed contents on the program guide area are changed, and the guide of the currently displayed program on the video device (TV) 10 appears on the program guide area.

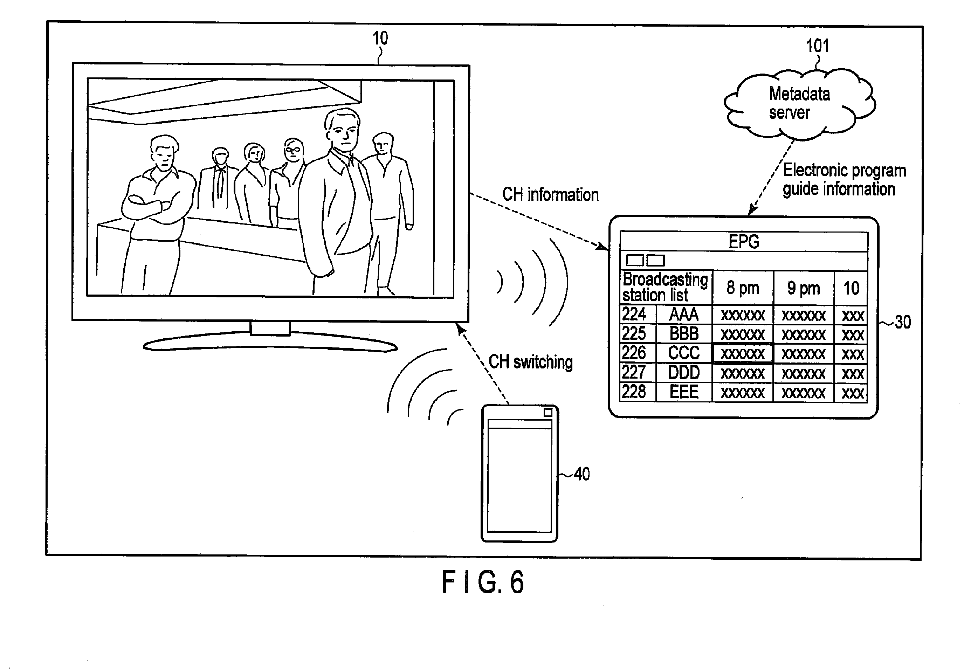

FIG. 6 shows the fifth example of the synchronization processing. This example assumes a case in which a smartphone 40 installed with a remote control application program is used in place of the IR remote control unit 4. In response to reception of a channel switching signal from the smartphone 40, the video device (TV) 10 switches a channel to be viewed. In response to occurrence of this channel switching event, the video device (TV) 10 automatically notifies the tablet computer 30 of channel information indicating a channel number as a switching destination.

The tablet computer 30 scrolls the program guide on the program guide area, so as to display a guide of a currently displayed program on the video device (TV) 10 on the program guide, based on the channel information notified from the video device (TV) 10 and the current time. As a result, the currently displayed contents on the program guide area are changed, and the guide of the currently displayed program on the video device (TV) 10 appears on the program guide area.

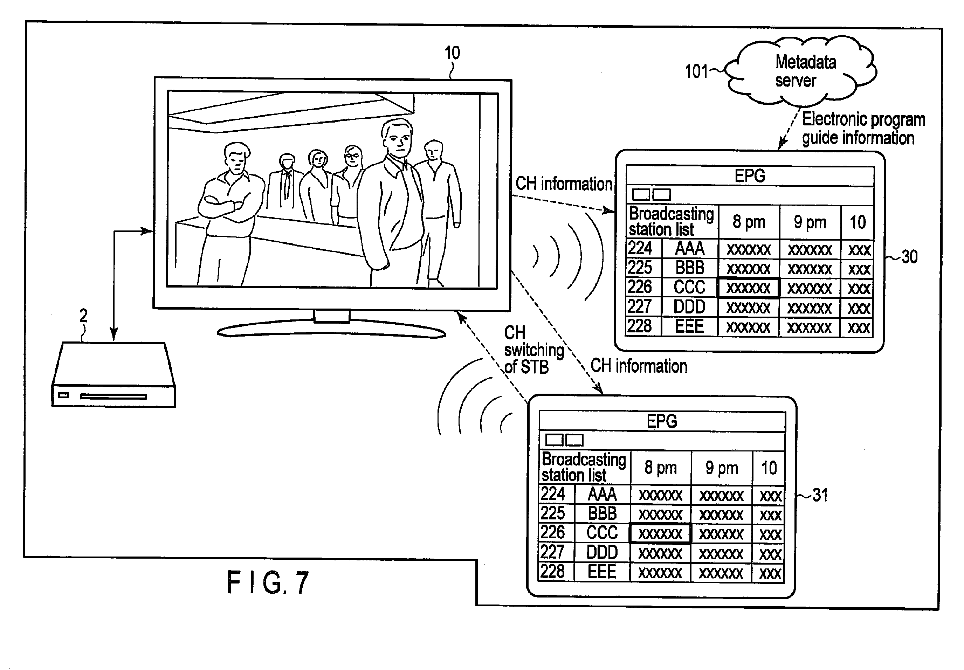

FIG. 7 shows the sixth example of the synchronization processing. This example assumes a case in which the STB 2 is connected to the external input of the video device (TV) 10, and a video image of a program of a channel tuned in by the STB 2 is displayed on the display of the video device (TV) 10, in the same manner as in the case of FIG. 3. The tablet computer 31 transmits a signal that requests to switch a channel of the STB 2 to the video device (TV) 10. The video device (TV) 10 can transmit a channel switching signal to the STB 2 in response to the signal received from the tablet computer 31. In response to the channel switching event of the STB 2, the video device (TV) 10 automatically notifies the tablet computers 30 and 31 of channel information indicating a channel number as a switching destination.

The tablet computer 30 scrolls the program guide on the program guide area, so as to display a guide of a currently displayed program on the video device (TV) 10 on the program guide, based on the channel information notified from the video device (TV) 10 and the current time. As a result, the currently displayed contents on the program guide area are changed, and the guide of the currently displayed program on the video device (TV) 10 appears on the program guide area.

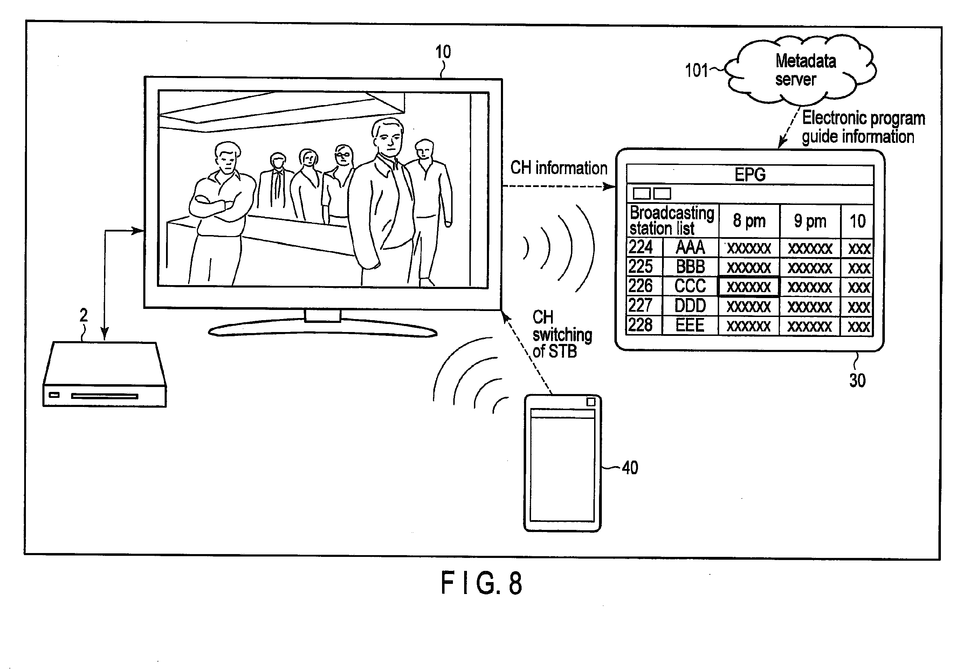

FIG. 8 shows the seventh example of the synchronization processing. The smartphone 40 transmits a signal that requests to switch a channel of the STB 2 to the video device (TV) 10. In response to the signal received from the smartphone 40, the video device (TV) 10 can transmit a channel switching signal to the STB 2. In response to the channel switching event of the STB 2, the video device (TV) 10 automatically notifies the tablet computer 30 of channel information indicating a channel number as a switching destination.

The tablet computer 30 scrolls the program guide on the program guide area, so as to display a guide of a currently displayed program on the video device (TV) 10 on the program guide, based on the channel information notified from the video device (TV) 10 and the current time. As a result, the currently displayed contents on the program guide area are changed, and the guide of the currently displayed program on the video device (TV) 10 appears on the program guide area.

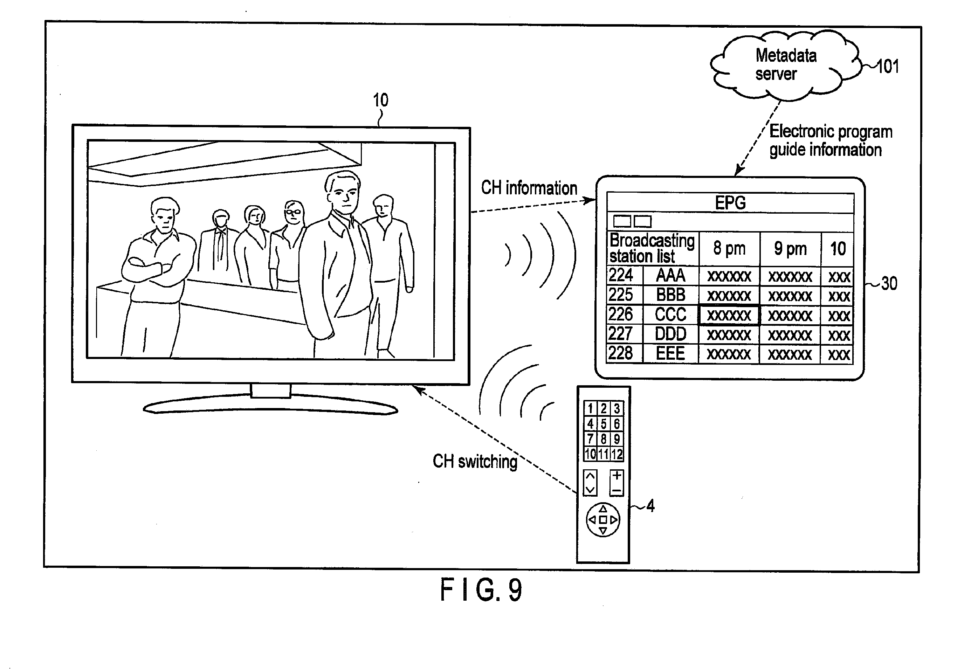

FIG. 9 shows the eighth example of the synchronization processing. This example assumes a case in which every time a channel of the video device (TV) 10 is switched, the video device (TV) 10 notifies the tablet computer 30 of channel information.

The tablet computer 30 is set to unconditionally accept a notification from an authentic TV. When it is determined that a channel switching operation of the video device (TV) 10 is a zapping operation, the video device (TV) 10 does not notify any channel information even when a channel switching event occurs. Not only when a channel switching request is received from an external device but also when a channel is switched based on, for example, viewing reservation, the video device (TV) 10 notifies the tablet computer 30 of channel information indicating a switching destination channel. Also, when the user switches a channel by operating a main body of the video device (TV) 10, the video device (TV) 10 notifies the tablet computer 30 of channel information indicating a switching destination channel.

When the user taps a certain broadcasting station (channel) on the program guide displayed on the tablet computer 30, the tablet computer 30 transmits a channel switching request signal that requests to switch a channel to that corresponding the tapped broadcasting station to the video device (TV) 10. When a channel switching trigger in the video device (TV) 10 is the tablet computer 30 itself, the tablet computer 30 can ignore a notification of the channel information from the video device (TV) 10. Thus, fruitless processing can be prevented from being executed in the tablet computer 30.

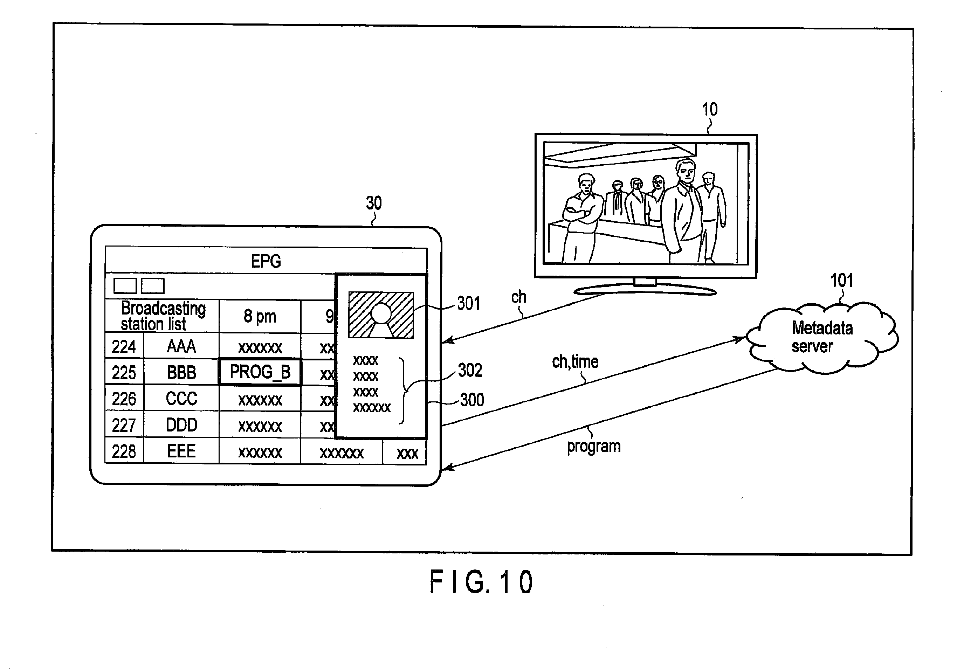

FIG. 10 shows the ninth example of the synchronization processing. The tablet computer 30 receives channel information (CH) indicating a currently tuned channel from the video device (TV) 10 by transmitting an inquiry to the video device (TV) 10 or by a notification from the video device (TV) 10. The tablet computer 30 changes the displayed contents on the program guide area, so as to display a guide of a currently displayed program on the video device (TV) 10 on the program guide, based on the channel information notified from the video device (TV) 10 and the current time. For example, if a currently tuned channel in the video device (TV) 10 is that of channel No. 225 (broadcasting station BBB), and the current time is 8 pm, a guide of a program to be broadcast at 8 pm in the channel of channel No. 225, for example, a program name "PROG_B" or the like appears on the program guide area, as shown in FIG. 10. In this case, the program name "PROG_B" may be highlighted. Furthermore, the tablet computer 30 transmits a guide information retrieval request including the channel information notified from the video device (TV) 10 and the current time to the metadata server 101, and retrieves detailed information associated with the currently on-air program in the currently tuned channel from the metadata server 101. Then, the tablet computer 30 displays the retrieved detailed information on the program guide in, for example, a popup form.

In FIG. 10, detailed information 300 is displayed on the program guide. This detailed information 300 includes an image 301, text 302 which describes a comment associated with a program, and the like. The image 301 may be a face image of a main character who appears in the currently on-air program in the currently tuned channel.

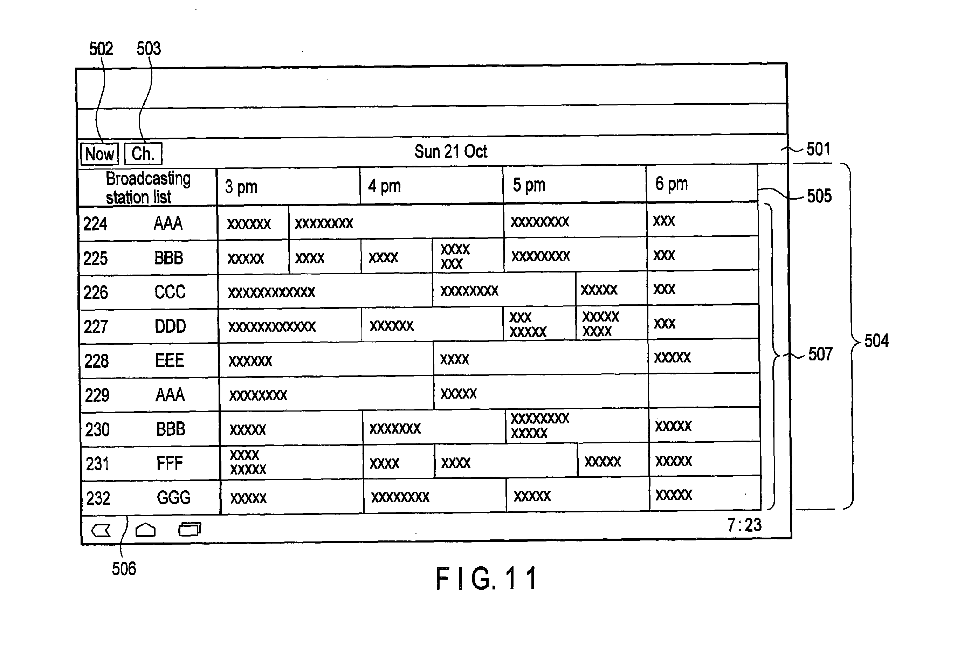

An example of the configuration of a program guide screen displayed by the tablet computer 30 will be described below with reference to FIG. 11.

The program guide screen includes a date area 501, "Now" button 502, "Ch" button 503, and program guide area 504. The date area 501 shows a date of a program guide to be displayed on the program guide area 504. When the user flicks the date area 501, a date on the date area 501 is changed, and the displayed contents of the program guide area 504 are changed accordingly.

The "Now" button 502 is used to issue a display request of a guide associated with a currently on-air program (currently displayed program) in a currently tuned channel on the video device 10. The "Ch" button 503 is used to issue a display request of guides associated with programs to be broadcast in the currently tuned channel on the video device 10.

The program guide area 504 includes a time axis area 505, broadcasting station list area 506, and program guide grids 507. When the user flicks the program guide area 504, channels or time zones to be displayed can be changed. When the user flicks the program guide grids 507 or broadcasting station list area 506 in an up-and-down direction, only channels (broadcasting stations) to be displayed are continuously changed while the time zones are fixed. When the user flicks the program guide grids 507 or time axis area 505 in a right-and-left direction, only time zones to be displayed are continuously changed while channels (broadcasting stations) are fixed. When the user flicks the program guide grids 507 obliquely, both channels (broadcasting stations) and time zones are continuously changed.

Processing executed when the user taps the "Now" button 502 on the program guide screen shown in FIG. 11 will be described below.

When the user taps the "Now" button 502, the tablet computer 30 transmits an inquiry signal of a currently tuned channel to the video device 10, thereby retrieving channel information indicating the currently tuned channel from the video device 10. Then, the tablet computer 30 automatically updates the displayed contents on the program guide area 504 based on the retrieved channel information and current time.

A case will be assumed wherein the currently tuned channel on the video device (TV) 10 is that of channel No. 227 (broadcasting station DDD), and the current time is 7 pm. In FIG. 11, channel No. 227 (broadcasting station DDD) already appears on the broadcasting station list 506. On the other hand, a time zone of 7 pm does not appear on the time axis area 505.

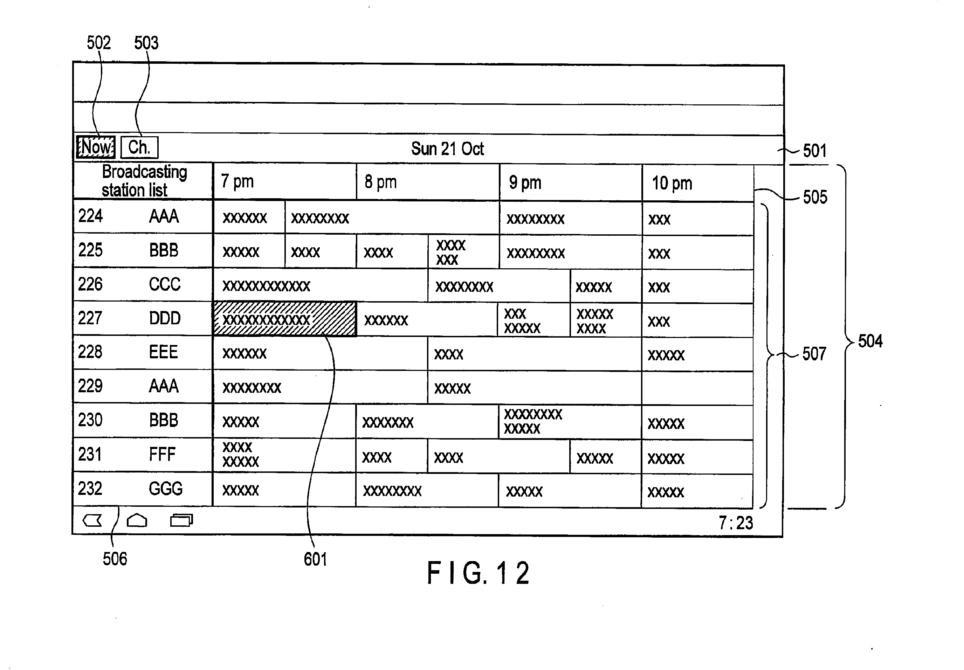

Therefore, time zones to be displayed are continuously changed while channels (broadcasting stations) are fixed. That is, the displayed contents on the program guide area 504 are scrolled in the time axis direction. As a result, as shown in FIG. 12, the displayed contents of the program guide area 504 are updated so that the time zone of 7 pm appears on the time axis area 505. Then, the tablet computer 30 highlights a guide of a program to be broadcast at 7 pm in the channel of channel No. 227 (broadcasting station DDD), as shown in FIG. 12. In this case, the tablet computer 30 may specify a display area 601 in the program grid 507 corresponding to the guide of the program to be broadcast at 7 pm in the channel of channel No. 227 (broadcasting station DDD), and may frame the specified display area 601 or display the display area 601 in a color different from other display areas. Furthermore, the tablet computer 30 may display the display area 601 in an enlarged scale.

Note that when the guide of the program to be broadcast at 7 pm in the channel of channel No. 227 (broadcasting station DDD) already appears on the program guide area 504, only processing for highlighting the guide of the program to be broadcast at 7 pm in the channel of channel No. 227 (broadcasting station DDD) is executed.

Processing executed when the user taps the "Ch" button 503 on the program guide screen shown in FIG. 11 will be described below.

When the user taps the "Ch" button 503, the tablet computer 30 transmits an inquiry signal of a currently tuned channel to the video device 10, thereby retrieving channel information indicating the currently tuned channel from the video device 10. Then, the tablet computer 30 automatically updates the displayed contents of the program guide area 504 based on the retrieved channel information. In this case, the displayed contents of the program guide area 504 are updated to change only channels to be displayed, while time zones are fixed.

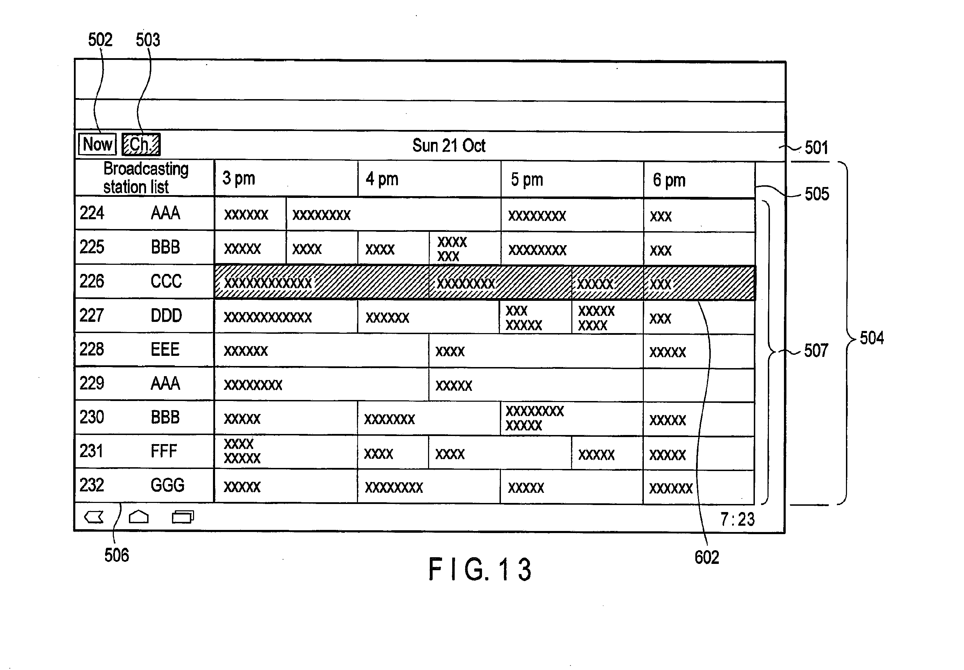

Assume that the currently tuned channel on the video device (TV) 10 is that of channel No. 226 (broadcasting station CCC). In FIG. 11, channel No. 226 (broadcasting station CCC) already appears on the broadcasting station list 506. Therefore, as shown in FIG. 13, the program guide area 504 is not scrolled, time zones are kept fixed, and only processing for highlighting guides of programs corresponding to channel No. 226 (broadcasting station CCC) is executed. In this case, the tablet computer 30 may specify a display area 602 in the program grids 507 corresponding to channel No. 226 (broadcasting station CCC), and may frame the specified display area 602 or may display the display area 602 in a color different from other display areas. Furthermore, the tablet computer 30 may display the display area 602 in an enlarged scale.

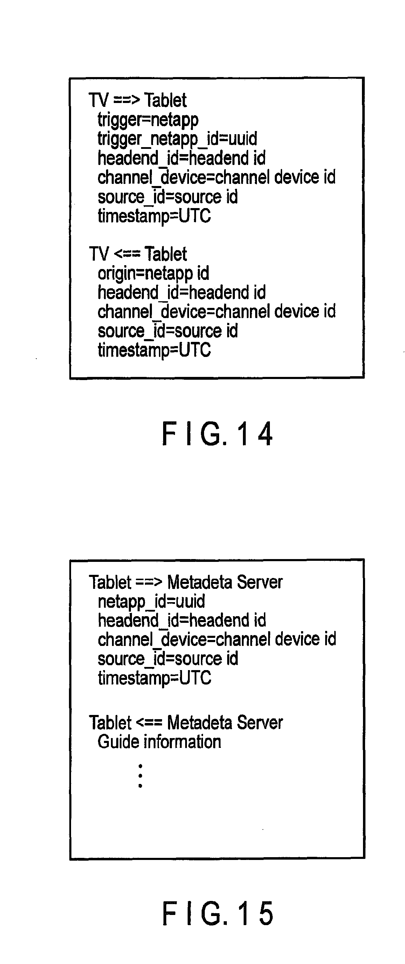

Communication parameters used in communications between the video device (TV) 10 and tablet computer 30 will be described below with reference to FIG. 14.

Channel information transmitted from the video device (TV) 10 to the tablet computer 30 includes, for example, the following communication parameters.
trigger
trigger_netapp_id
headend_id
channel_device
source_id
timestamp

The communication parameter "trigger" indicates a factor (trigger) of occurrence of a channel switching operation. The channel switching triggers include an operation of the TV main body (trigger = tv), that of the IR remote controller (trigger = ir), and that of a network application on the tablet computer or smartphone (trigger = netapp). When the channel switching trigger is the network application, the communication parameter "trigger_netapp_id" indicates an id (uuid) unique to the network application which transmitted a channel switching request.

The communication parameters "headend_id", "channel_device", and "source_id" correspond to channel information required to uniquely identify a tuned channel.

The communication parameter "timestamp" indicates a time of occurrence of the channel switching operation. The communication parameter "timestamp" is an optional parameter, and may be transmitted as needed.

A channel switching request transmitted from the tablet computer 30 to the video device (TV) 10 includes, for example, the following communication parameters.
origin
headend_id
channel_device
source_id
timestamp

The communication parameter "origin" indicates an id (netapp id) unique to the network application, which transmitted the channel switching request.

The communication parameters "headend_id", "channel_device", and "source_id" correspond to channel information required to uniquely identify a tuned channel. Note that a parameter system required to uniquely identify the tuned channel is often different depending on countries or regions, and parameters according to a country or region may be used as communication parameters associated with channel information.

The communication parameter "timestamp" indicates a transmission time of the channel switching request. The communication parameter "timestamp" is an optional parameter, and may be transmitted as needed.

Communication parameters used in communications between the tablet computer 30 and metadata server 101 will be described below with reference to FIG. 15.

A guide information retrieval request transmitted from the tablet computer 30 to the metadata server 101 includes, for example, the following communication parameters.
netapp
headend_id
channel_device
source_id
timestamp

The communication parameter "netapp" indicates an id (uuid) unique to the network application, which transmitted the guide information retrieval request.

The communication parameters "headend_id", "channel_device", and "source_id" correspond to channel information required to uniquely identify a tuned channel. The communication parameter "timestamp" indicates the current time.

The metadata server 101 decides guide information (detailed information) of which is to be transmitted, based on the channel information and current time included in the received guide information retrieval request, and transmits the guide information (detailed information) of the decided program to the device designated by "netapp".

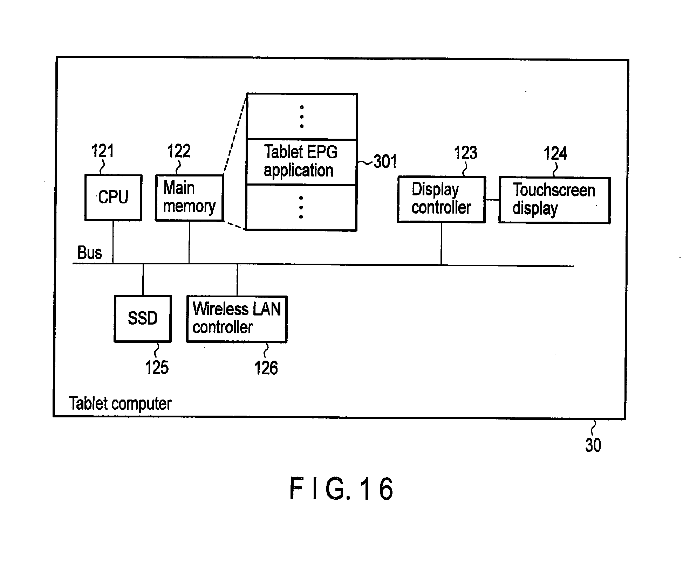

The system arrangement of the tablet computer 30 will be described below with reference to FIG. 16.

The tablet computer 30 includes a CPU 121, main memory 122, display controller 123, touchscreen display 124, SSD (Solid State Drive) 125, wireless LAN controller 126, and the like.

The CPU 121 is a processor which controls respective components of the tablet computer 30. The CPU 121 executes various programs loaded from the SSD 125 onto the main memory 122. These programs include a tablet EPG application program 301A. The tablet EPG application program 301A is the aforementioned network application, and controls display of a program guide (EPG) on the touchscreen display 124 in cooperation with the video device 10. The device authentication unit 31, channel change request transmitter 32, current program solution unit 33, program guide information receiver 34, program related information external transmitter 35, network interface unit 36, channel change notification receiver 37, currently displayed channel request unit 38, and program information display unit 39 described using FIG. 1 may be implemented by the tablet EPG application program 301A.

The display controller 123 generates a display signal to be displayed on the touchscreen display 124. The touchscreen display 124 includes a liquid crystal display and a tablet arranged on this liquid crystal display. The touchscreen display 124 can detect a touch position on the screen. The wireless LAN controller 126 executes wireless communications conforming to the IEEE 802.11 standard.

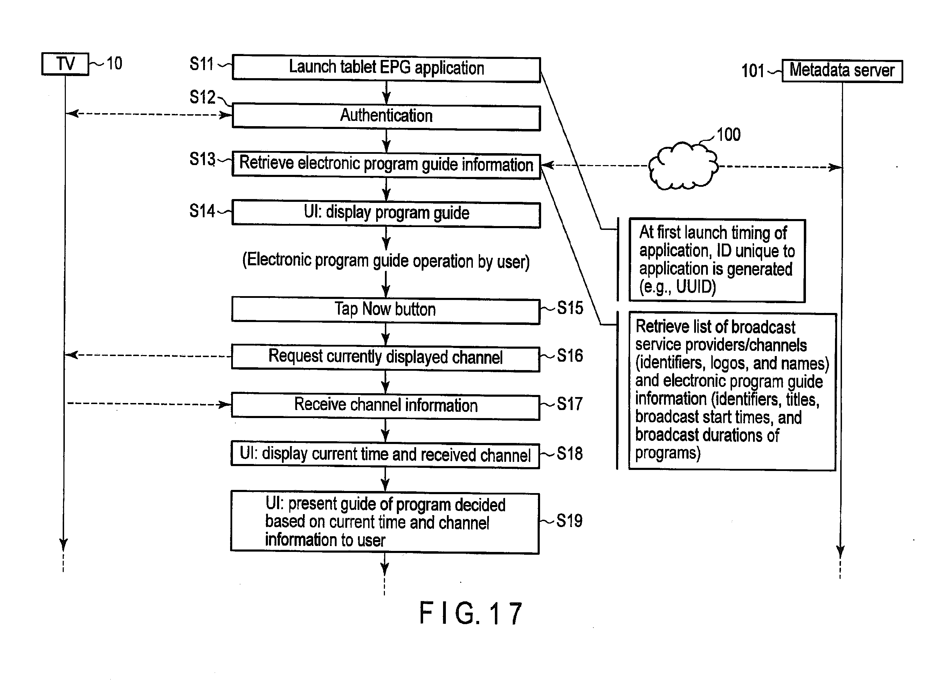

The processing sequence executed when the user taps the "Now" button will be described below with reference to the flowchart shown in FIG. 17.

The tablet EPG application program 301A is launched (step S11). At the first launch timing of the tablet EPG application program 301A, the tablet EPG application program 301A executes processing for generating an ID unique to itself. After the next or subsequent launch timing of the tablet EPG application program 301A, this unique ID generation processing need not be executed. The tablet EPG application program 301A executes authentication processing required to authenticate the video device (TV) 10 on the home network (step S12). Then, the tablet EPG application program 301A retrieves program guide (EPG) information from the metadata server 101 (step S13). In this step S13, a list of broadcast service providers(channels) (identifiers, logos, and names of respective channels) and program guide information (identifiers, titles, broadcast start times, and broadcast durations of respective programs) are retrieved.

The tablet EPG application program 301A displays the program guide (program guide screen) described using FIG. 11 on the touchscreen display 124 based on the program guide (EPG) information (step S14).

When the user taps the "Now" button 502 on the program guide screen (step S15), the tablet EPG application program 301A transmits an inquiry signal of a currently tuned channel (currently displayed channel) to the video device 10 (step S16), thereby retrieving channel information indicating the currently tuned channel from the video device 10 (step S17). Then, the tablet EPG application program 301A updates the displayed contents of the program guide area 504 so that the current time is displayed on the time axis area 505 and the channel indicated by the channel information is displayed on the broadcasting station list area 506 (step S18). The tablet EPG application program 301A then specifies a display area corresponding to a currently on-air program in the channel indicated by the channel information based on the current time and program guide information, and highlights that display area (step S19). In the steps S18, S19, the displayed contents of the program guide area 504 is changed, thus, the guide corresponding to the currently on-air program in the currently tuned channel is displayed on the program guide area 504, and the guide is highlighted.

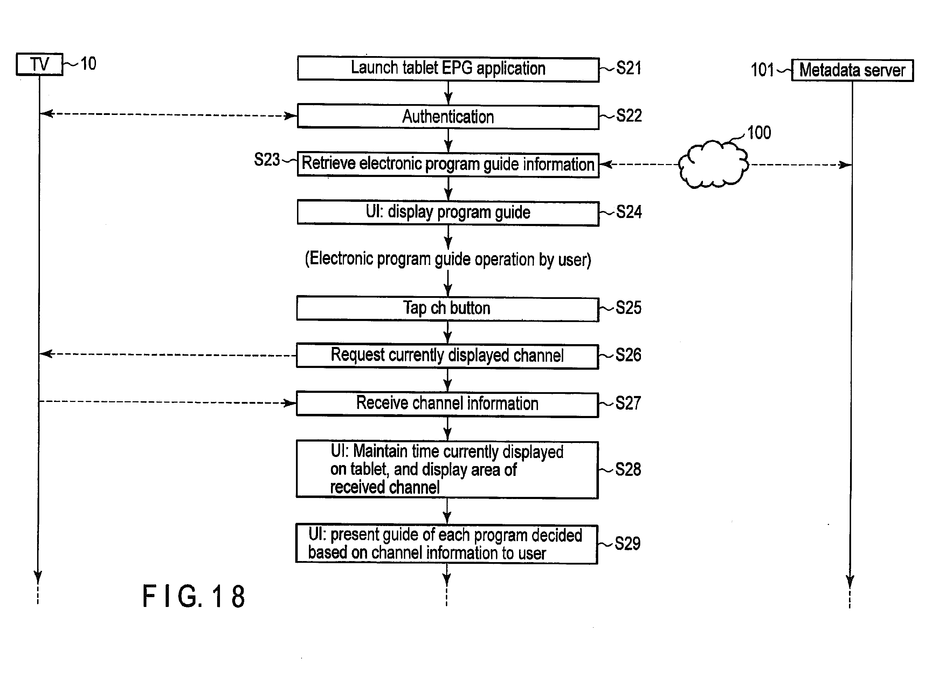

The processing sequence executed when the user taps the "Ch" button will be described below with reference to the flowchart shown in FIG. 18.

When the tablet EPG application program 301A is launched (step S21), it executes authentication processing required to authenticate the video device (TV) 10 on the home network (step S22). Then, the tablet EPG application program 301A retrieves program guide (EPG) information from the metadata server 101 (step S23), and displays the program guide (program guide screen) described using FIG. 11 on the touchscreen display 124 based on the program guide (EPG) information (step S24).

When the user taps the "Ch" button 503 on the program guide screen (step S25), the tablet EPG application program 301A transmits an inquiry signal of a currently tuned channel (currently displayed channel) to the video device 10 (step S26), thereby retrieving channel information indicating the currently tuned channel from the video device 10 (step S27). Then, the tablet EPG application program 301A updates the displayed contents of the program guide area 504 so that the channel indicated by the channel information is displayed on the broadcasting station list area 506 while time zones on the time axis area 505 are maintained in the current display state (step S28). The tablet EPG application program 301A then specifies a display area corresponding to the channel indicated by the channel information based on the channel information and program guide information, and highlights that display area corresponding to the channel (step S29). In the steps S28, S29, the displayed contents of the program guide area 504 is changed, thus, the guide of each of the programs corresponding to the currently tuned channel is displayed on the program guide area 504, and the guide is highlighted.

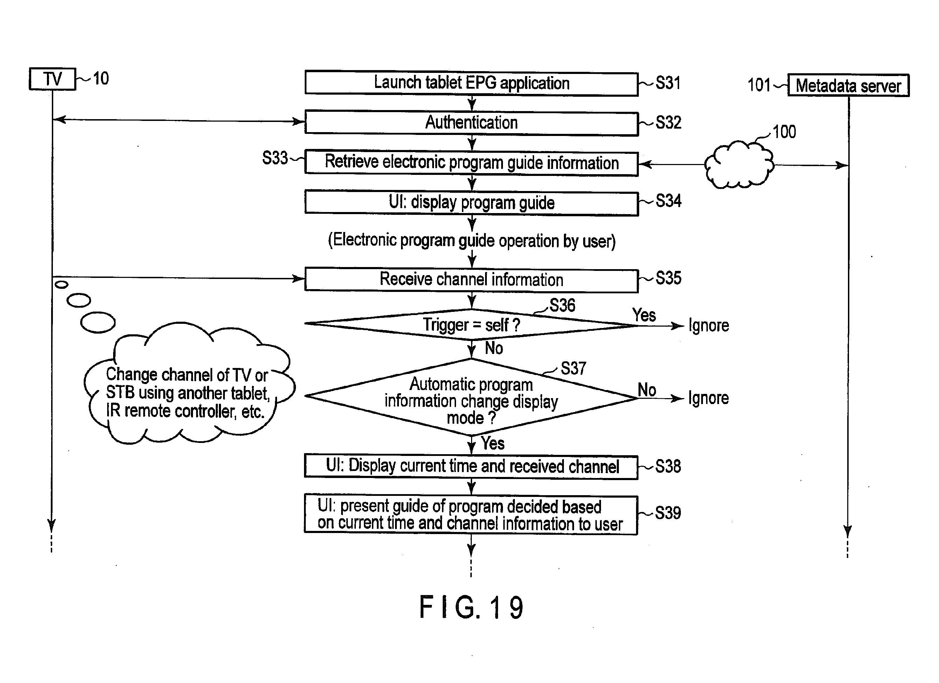

The first example of the processing sequence executed when the video device (TV) 10 notifies the tablet computer 30 of channel information will be described below with reference to the flowchart shown in FIG. 19.

When the tablet EPG application program 301A is launched (step S31), it executes authentication processing required to authenticate the video device (TV) 10 on the home network (step S32). Then, the tablet EPG application program 301A retrieves program guide (EPG) information from the metadata server 101 (step S33), and displays the program guide (program guide screen) described using FIG. 11 on the touchscreen display 124 based on the program guide (EPG) information (step S34).

When a channel switching event has occurred in the video device (TV) 10, the video device (TV) 10 transmits channel information indicating a switching destination channel to the tablet EPG application program 301A of the tablet computer 30. The tablet EPG application program 301A receives this channel information (step S35). The tablet EPG application program 301A determines whether or not a channel switching trigger in the video device (TV) 10 is the tablet EPG application program 301A itself (step S36). This determination step can be executed based on the communication parameters (trigger and trigger_netapp_id) included in the channel information.

If the channel switching trigger is the tablet EPG application program 301A itself (YES in step S36), the tablet EPG application program 301A ignores the notified channel information.

On the other hand, if the channel switching trigger is not the tablet EPG application program 301A itself (NO in step S36), the tablet EPG application program 301A determines whether or not a current display mode is an "automatic program information change display mode" (step S37). The "automatic program information change display mode" is a display mode which automatically updates the contents of the program guide in synchronism with occurrence of the channel switching event. The user can designate on/off switching of the "automatic program information change display mode".

If the current display mode is not the "automatic program information change display mode" (NO in step S37), the tablet EPG application program 301A ignores the notified channel information. On the other hand, if the current display mode is the "automatic program information change display mode" (YES in step S37), the tablet EPG application program 301A updates the displayed contents of the program guide area 504 so that the current time is displayed on the time axis area 505 and a channel indicated by the channel information is displayed on the broadcasting station list area 506 (step S38). Then, the tablet EPG application program 301A specifies a display area corresponding to a currently on-air program in the channel indicated by the channel information based on the current time and program guide information, and highlights that display area (step S39).

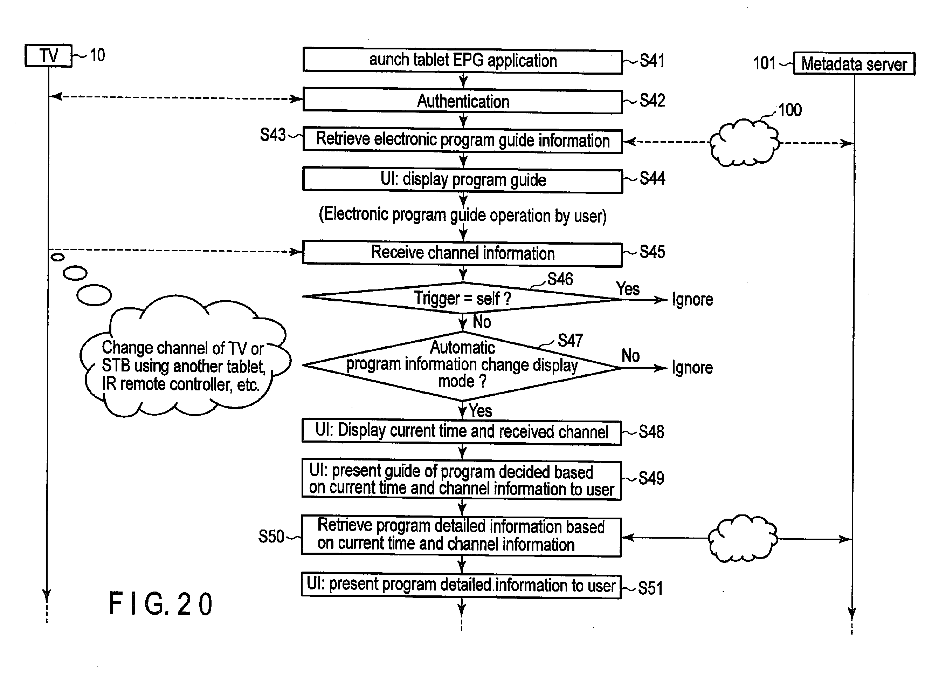

The second example of the processing sequence executed when the video device (TV) 10 notifies the tablet computer 30 of channel information will be described below with reference to the flowchart shown in FIG. 20.

Processes in steps S41 to S49 in FIG. 20 are the same as those in steps S31 to S39 shown in FIG. 19. In FIG. 20, the following processes are further executed.

That is, after the tablet EPG application program 301A updates the displayed contents of the program guide area 504, it transmits a guide information retrieval request including the received channel information and current time to the metadata server 101, and retrieves program detailed information associated with a currently on-air program in the currently tuned channel from the metadata server 101 (step S50). Then, the tablet EPG application program 301A displays the retrieved program detailed information on the program guide screen (step S51).

As described above, according to this embodiment, since a guide corresponding to a program in a channel currently displayed on the video device 10 side can be displayed on the screen of the tablet computer 30, information associated with the currently displayed program can be presented to the user. Also, since the tablet computer 30 executes processing for retrieving channel information from the video device 10 in response to a user operation such as tapping of the "Now" button, a guide corresponding to a program in a channel currently displayed on the video device 10 side can be displayed on the screen of the tablet computer 30 at a desired timing of the user.

In addition to the user operation such as tapping of the "Now" button, when the video device 10 notifies the tablet computer 30 of channel information in response to a channel switching event on the video device 10 side, a guide corresponding to a program in a channel currently displayed on the video device 10 side can be displayed on the screen of the tablet computer 30. Hence, the displayed contents of the program guide on the tablet computer 30 can be updated in real time in response to the channel switching event on the video device 10 side.

Note that when the already received program guide information does not include any information corresponding to a guide, which corresponds to a program in the currently displayed channel, the tablet computer 30 may transmit a program information retrieval request including the currently displayed channel and current time to the metadata server 101, thereby retrieving the corresponding program guide information from the metadata server 101.

Also, all of the program guide display control processes of this embodiment can be implemented by a computer program. By only installing and executing this computer program in a computer (PDA, smartphone, tablet computer, etc.) via a computer-readable storage medium storing this program, the same effects as in this embodiment can be easily provided.

## Claims

1. An electronic apparatus (30) configured to communicate with a video device (10), **characterized by** comprising:
a program guide information receiver (34) configured to receive electric program guide information from an external server (101) via a network (100);
a channel information receiver (37, 38) configured to receive, from the video device (10), channel information indicating a currently tuned channel in the video device (10); and
a display controller (39) configured to display an electric program guide on a program guide area (504) on a display screen of the electronic apparatus (30) based on the electric program guide information,
wherein the display controller (39) is further configured to change displayed contents of the program guide area (504) based on the received channel information and a current time in response to reception of the channel information, such that a guide corresponding to a currently on-air program in the currently tuned channel is displayed on the program guide area (504).

2. The apparatus of Claim 1,
**characterized in that** the channel information receiver (37, 38) is further configured to transmit an inquiry signal of a currently tuned channel to the video device (10) in response to occurrence of an event that requests to display a guide associated with a currently on-air program in the currently tuned channel.

3. The apparatus of Claim 1,
**characterized in that** the video device (10) is configured to transmit the channel information to the electronic apparatus (30) in response to occurrence of a channel switching event.

4. The apparatus of Claim 1,
**characterized in that** the display controller (39) is further configured to highlight the guide when the guide corresponding to the currently on-air program in the currently tuned channel has already been displayed on the program guide area (504).

5. The apparatus of Claim 1, **characterized by** further comprising a channel switching module (32) configured to transmit, when a broadcasting station in a broadcasting station list (506) displayed on the program guide area (504) is selected by a user operation, a channel switching request signal that requests to switch to a channel corresponding to the selected broadcasting station to the video device (10).

6. The apparatus of Claim 1,
**characterized in that** the display controller (39) is further configured to transmit a guide information retrieval request including the received channel information and the current time to the external server (101), to retrieve detailed information associated with the currently on-air program in the currently tuned channel from the external server (101), and to display the detailed information on the display screen.

7. A content display system **characterized by** comprising a video device (10) configured to receive broadcast program data and an electronic apparatus (30) configured to communicate with the video device (10), the system comprising:
a channel information transmitter (17) in the video device (10), configured to transmit channel information indicating a currently tuned channel in the video device (10) to the electronic apparatus (30);
a program guide information receiver (34) in the electronic apparatus (30), configured to receive electric program guide information from an external server (101) via a network (100); and
a display controller (39) in the electronic apparatus (30), configured to display an electric program guide on a program guide area (504) on a display screen of the electronic apparatus (30) based on the electric program guide information,
wherein the display controller (39) is further configured to change displayed contents of the program guide area (504) based on the received channel information and a current time in response to reception of the channel information from the video device (10), such that a guide corresponding to a currently on-air program in the currently tuned channel is displayed on the program guide area (504).

8. The system of Claim 7, **characterized by** further comprising a transmitter (38) in the electronic apparatus (30), configured to transmit an inquiry signal of a currently tuned channel to the video device (10) in response to occurrence of an event that requests to display a guide associated with a currently on-air program in the currently tuned channel.

9. The system of Claim 7,
**characterized in that** the video device (10) is configured to transmit the channel information to the electronic apparatus in response to occurrence of a channel switching event.

10. A program guide display control method of casing an electronic apparatus (30) configured to communicate with a video device (10) to display an electric program guide, the method **characterized by** comprising:
receiving electric program guide information from an external server (101) via a network (100);
receiving, from the video device (10), channel information indicating a currently tuned channel in the video device (10);
displaying the electric program guide on a program guide area (504) on a display screen of the electronic apparatus (30) based on the electric program guide information; and
changing displayed contents of the program guide area (504) based on the received channel information and a current time in response to reception of the channel information, such that a guide corresponding to a currently on-air program in the currently tuned channel is displayed on the program guide area (504).

11. A computer-readable, non-transitory storage medium having stored thereon a computer program, the computer program causing a computer (30) to:
receive program electric guide information from an external server (101) via a network;
receive, from the video device (10), channel information indicating a currently tuned channel in the video device (10);
display a electric program guide on a program guide area (504) on a display screen of the electronic apparatus (30) based on the program guide information; and
change displayed contents of the program guide area (504) based on the received channel information and a current time in response to reception of the channel information, such that a guide corresponding to a currently on-air program in the currently tuned channel is displayed on the electric program guide area (504).
